# FASCICULE DE BREVET EUROPEEN

(11) **EP 2 724 857 B1**
(45) Date de publication et mention de la délivrance du brevet: **04.11.2015**
(21) Numéro de dépôt: 13184398.9
(22) Date de dépôt: 13.09.2013
(51) Int. Cl.: B32B 27/08, B32B 27/30, B32B 27/32, B32B 27/36, B65B 53/00, B65B 53/02

(54) **Film en matière plastique thermorétractable multicouche**
Wärmeschrumpffähige Mehrschicht-Kunststofffolie
Film made of multi-layer heat-shrink plastic material

(30) Priorité: 26.10.2012 FR 1260271
(43) Date de publication de la demande: 30.04.2014
(60) Demande divisionnaire: 15183771.3
(73) Titulaire: Sleever International Company, 91420 Morangis (FR)
(72) Inventeur: Fresnel, Eric, 75014 Paris (FR)
(74) Mandataire: Parzy, Benjamin Alain

(56) Documents cités:
- EP-A1- 2 008 811
- EP-A1- 2 039 507
- WO-A1-2008/003946
- WO-A1-2009/142805
- DATABASE WPI Week 200252 Thomson Scientific, London, GB; AN 2002-482296 XP002697601, -& JP 2002 029514 A (DAINIPPON PRINTING CO LTD) 29 janvier 2002 (2002-01-29)

## Description

L'invention concerne un film en matière plastique thermorétractable multicouche, obtenu de préférence par coextrusion et présentant une basse densité, plus particulièrement adapté à la réalisation de manchons thermorétractables pour le recouvrement d'objets en polytéréphtalate d'éthylène (ou PET), comme des bouteilles.

### ARRIERE PLAN DE L'INVENTION

On connaît du document EP 2 008 811 un film en matière plastique thermorétractable comportant une couche centrale contenant principalement de la résine polyoléfine, des couches externes contenant une résine polyester, et des couches intermédiaires comprenant une résine polyéthylène comprenant un composé en méthacrylate de glycidyl (ou GMA). JP 200 2 02 95 14 A divulgue un film thermorétractable multicouche comportant une première couche centrale comportant une polyoléfine et deux couches externes comportant une résine à base de styrène ou de polyester.

### OBJET DE L'INVENTION

Un aspect de l'invention est de proposer un film dont la cohésion entre les couches est renforcée.

Un autre aspect de l'invention est de proposer un film dont le spectre en proche infrarouge est adapté, par exemple pour être proche de celui du récipient en PET recouvert à l'aide d'un tel film, ou au contraire être spécifique, pour permettre une différentiation du manchon réalisé à l'aide d'un tel film d'autres manchons.

### DESCRIPTION DETAILLEE DE L'INVENTION

L'invention concerne un film thermorétractable multicouche comportant :
- une première couche centrale formée à partir d'une première composition comportant au moins une polyoléfine,
- des deuxièmes couches intermédiaires formées à partir d'une deuxième composition et qui recouvrent respectivement une des faces de la première couche, la deuxième composition comportant une résine à base de styrène,
- des troisièmes couches externes formées à partir d'une troisième composition et qui recouvrent respectivement l'une des deuxièmes couches intermédiaires, la troisième composition comportant au moins un polyester.

On obtient ainsi un film multicouche comportant respectivement les couches suivantes empilées les unes sur les autres :
- une troisième couche externe,
- une deuxième couche intermédiaire,
- une première couche centrale,
- une deuxième couche intermédiaire,
- une troisième couche externe.

L'utilisation d'une résine à base de styrène pour les couches intermédiaires permet un renforcement de la cohésion entre les couches. En particulier, lorsqu'un manchon est réalisé à partir du film de l'invention, la résine à base de styrène pour les couches intermédiaires permet d'éviter que les couches ne se détachent les unes des autres lors de la thermorétraction du manchon sur une bouteille ou autre support.

Les matériaux utilisés permettent en outre d'obtenir un film de basse densité susceptible d'assurer la flottaison de manchons réalisés à partir d'un tel film.

Il est ainsi aisé de recycler de tels manchons. En effet, lors d'un recyclage de bouteilles en PET, les bouteilles équipées de leur manchon sont broyées puis plongées dans un bassin. Alors que les pastilles en PET des bouteilles vont couler, les pastilles provenant des manchons font venir flotter à la surface du bassin. Il est ainsi facile de séparer PET et manchons et éviter que des pastilles issues des manchons demeurent avec les pastilles en PET pour la suite du cycle de recyclage, les pastilles issues des manchons risquant de détériorer le recyclage des pastilles de PET.

Les matériaux utilisés sont choisis pour que de préférence le film ait une densité inférieure à 1.

De préférence, le film est composé uniquement de la première couche centrale, des deuxièmes couches intermédiaires et des troisièmes couches externes.

Selon un mode préféré de réalisation de l'invention, la résine de la deuxième composition comporte au moins un élastomère thermoplastique à base d'un copolymère bloc styrénique, en particulier un premier copolymère bloc polystyrène-polybutadiène-polystyrène.

De préférence, le premier copolymère bloc polystyrène-polybutadiène-polystyrène comprend 70% en masse de motifs en styrène par rapport à la masse totale du premier copolymère bloc.

Le premier copolymère est par exemple du Styroflex 2G66 (marque déposée).

De préférence, la résine de la deuxième composition comporte, outre:
a) le premier copolymère bloc polystyrène-polybutadiène-polystyrène qui comprend 70% en masse de motifs en styrène par rapport à la masse totale du premier copolymère bloc ;
   un ou des composants choisis parmi
b) un deuxième copolymère bloc polystyrène-polybutadiène-polystyrène à moins de 70% en masse de motifs en styrène par rapport à la masse totale du deuxième copolymère bloc,
c) un polystyrène.

Dans ce cas, les composés a), b), c) se trouvent dans la résine selon des proportions massiques respectives comprises dans les fourchettes respectives a):[30%;80%],b):[0%;70%],c):[0%;30%], la somme des trois proportions étant égale à 100%.

Selon un aspect particulier de l'invention, la première composition comporte une ou plusieurs polyoléfines, parmi :
d) un premier polyéthylène à basse densité linéaire ;
e) un deuxième polyéthylène à basse densité linéaire ;
f) un polyéthylène à haute densité ;
g) un polyéthylène à basse densité linéaire catalysé par métallocène ;
h) un polypropylène.

Avantageusement alors, les polyoléfines d, e, f, g et h sont présentes dans la première composition selon des proportions massiques respectives comprises dans les fourchettes respectives d):[20%;40%], e):[30%;60%], f) : [20%;40%], g) : [30%;70%], et h) : [0%;40%], la somme des proportions massiques étant égale à 100%.

Selon encore un autre aspect particulier de l'invention, la troisième composition comporte un ou des composés choisis parmi:
i) un polytéréphtalate d'éthylène modifié au 1,4 cyclohexanediméthanol,
j) un polyester ou un copolyester à basse température de transition vitreuse,
k) un polytéréphtalate d'éthylène modifié au neopentyl glycol, et
l) un polyester cristallisable.

De préférence alors, les composés i),j),k),1) sont présents dans la troisième composition selon des proportions massiques respectives comprises dans les fourchettes respectives i):[0%;99%], j):[0% ;40%], k):[0%;99], et 1):[0%;20%], la somme des proportions massiques étant égale à 100%.

Avantageusement, le composé j) est un polytéréphtalate d'éthylène modifié au diéthylène glycol.

Avantageusement, le composé 1) est un polytéréphtalate d'éthylène.

Avantageusement, la troisième composition comporte en outre au moins un agent de glissant tel qu'un silicate ou un mélange de talc et d'un amide d'acide gras ou un mélange de plusieurs amides d'acide gras.

De préférence, la première couche centrale a une épaisseur comprise entre 55 et 70% de l'épaisseur totale du film, les deuxièmes couches intermédiaires ont ensemble une épaisseur comprise entre 15 et 30% de l'épaisseur totale du film et les troisièmes couches externes ont ensemble une épaisseur comprise entre 15 et 30% de l'épaisseur totale du film.

Selon un autre aspect particulier de l'invention, les troisièmes couches externes comportent chacune un composé ayant un spectre d'émission dans le proche infra-rouge centré sur une longueur d'onde comprise entre 1400 et 1900 nanomètres.

De façon avantageuse, le composé permet qu'un manchon réalisé à partir d'un tel film se différencie aisément de manchons réalisés à l'aide d'autres films. Lors d'un tri optique de bouteilles, le spectre en proche infrarouge d'un manchon réalisé à partir d'un tel film sera nécessairement différent du spectre des manchons réalisés à l'aide d'autres films de sorte que la présence du manchon ne gênera pas le tri de la bouteille en PET.

Avantageusement, le composé est un vernis recouvrant les surfaces libres des deux troisièmes couches externes.

Alternativement, le composé est incorporé à la troisième composition de sorte que les deux troisièmes couches externes aient un spectre d'émission dans le proche infra-rouge centré sur une longueur d'onde comprise entre 1400 et 1900 nanomètres. Avantageusement alors, le composé comporte un polytéréphtalate d'éthylène. Avantageusement encore, le composé comporte un polyester modifié au glycol ou un polyester modifié par un acide.

En variante, le composé est choisi pour donner au film un spectre en proche infrarouge proche de celui du récipient en PET recouvert à l'aide d'un tel film. Lors d'un tri optique de bouteilles, le spectre en proche infrarouge d'un manchon réalisé à partir d'un tel film ne provoquera pas d'interférence avec le spectre en proche infrarouge de la bouteille en PET recouverte dudit manchon de sorte que la présence du manchon ne gênera pas le tri de la bouteille en PET.

## Revendications

1. Film thermorétractable multicouche **caractérisé en ce qu'**il comporte :
- une première couche centrale formée à partir d'une première composition comportant au moins une polyoléfine,
- des deuxièmes couches intermédiaires formées à partir d'une deuxième composition et qui recouvrent respectivement une des faces de la première couche, la deuxième composition comportant une résine à base de styrène,
- des troisièmes couches externes formées à partir d'une troisième composition et qui recouvrent respectivement l'une des deuxièmes couches intermédiaires, la troisième composition comportant au moins un polyester.

2. Film selon la revendication 1, dans lequel la résine de la deuxième composition comporte au moins un élastomère thermoplastique à base d'un copolymère bloc styrénique.

3. Film selon la revendication 2, dans lequel le copolymère bloc styrénique est un copolymère bloc polystyrène-polybutadiène-polystyrène.

4. Film selon la revendication 3, dans lequel le copolymère bloc polystyrène-polybutadiène-polystyrène comprend 70% en masse de motifs en styrène par rapport à la masse totale du copolymère bloc.

5. Film selon la revendication 4, dans lequel la résine de la deuxième composition comporte, outre le composé suivant:
a) le copolymère bloc polystyrène-polybutadiène-polystyrène, en tant que premier copolymère bloc, qui comprend 70% en masse de motifs en styrène par rapport à la masse totale du premier copolymère bloc,
un ou des composés choisis parmi :
b) un deuxième copolymère bloc polystyrène-polybutadiène-polystyrène à moins de 70% en masse de motifs en styrène par rapport à la masse totale du deuxième copolymère bloc,
c) un polystyrène.

6. Film selon la revendication 5, dans lequel les composés a), b), c) se trouvent dans la résine selon des proportions massiques respectives comprises dans les fourchettes respectives suivantes a):[30%;80%], b) : [0%;70%], c) : [0%;30%], la somme des trois proportions étant égale à 100%.

7. Film selon la revendication 1, dans lequel la première composition comporte une ou plusieurs polyoléfines choisies parmi :
d) un premier polyéthylène à basse densité linéaire,
e) un deuxième polyéthylène à basse densité linéaire,
f) un polyéthylène à haute densité,
g) un polyéthylène à basse densité linéaire catalysé par métallocène,
h) un polypropylène.

8. Film selon la revendication 7, dans lequel les polyoléfines d), e), f), g) et h) sont présentes dans la première composition selon des proportions massiques respectives comprises dans les fourchettes respectives d): [ 20%;40%], e):[30%;60%], f):[20%;40%], g):[30%;70%], et h):[0%;40%], la somme des proportions massiques étant égale à 100%.

9. Film selon la revendication 1, dans lequel la troisième composition comporte un ou des composés choisis parmi :
i) un polytéréphtalate d'éthylène modifié au 1,4 cyclohexanediméthanol,
j) un polyester ou un copolyester à basse température de transition vitreuse,
k) un polytéréphtalate d'éthylène modifié au neopentyl glycol, et
l) un polyester cristallisable.

10. Film selon la revendication 9, dans lequel les composés i), j), k) et 1) sont présents dans la troisième composition selon des proportions massiques respectives comprises dans les fourchettes respectives i):[0%;99%], j):[0% ;40%], k):[0%;99%], et 1):[0%;20%], la somme des proportions massiques étant égale à 100%.

11. Film selon la revendication 9, dans lequel le composé j) est un polytéréphtalate d'éthylène modifié au diéthylène glycol.

12. Film selon la revendication 9, dans lequel le composé 1) est un polytéréphtalate d'éthylène.

13. Film selon la revendication 9, dans le lequel la troisième composition comporte en outre au moins un agent de glissant tel qu'un silicate ou un mélange de talc et d'un amide d'acide gras ou un mélange de plusieurs amides d'acide gras.

14. Film selon la revendication 1, dans lequel la première couche centrale a une épaisseur comprise entre 55 et 70% de l'épaisseur totale du film, les deuxièmes couches intermédiaires ont ensemble une épaisseur comprise entre 15 et 30% de l'épaisseur totale du film et les troisièmes couches externes ont ensemble une épaisseur comprise entre 15 et 30% de l'épaisseur totale du film.

15. Film selon la revendication 1, dans lequel les troisièmes couches externes comportent chacune un composé ayant un spectre d'émission dans le proche infra-rouge centré sur une longueur d'onde comprise entre 1400 et 1900 nanomètres.

16. Film selon la revendication 15, dans lequel le composé est un vernis recouvrant les surfaces libres des deux troisièmes couches externes.

17. Film selon la revendication 15 dans lequel le composé est incorporé à la troisième composition de sorte que les deux troisièmes couches externes aient un spectre d'émission dans le proche infra-rouge centré sur une longueur d'onde comprise entre 1400 et 1900 nanomètres.

18. Film selon la revendication 17 dans lequel le composé comporte un polytéréphtalate d'éthylène.

19. Film selon la revendication 17 dans lequel le composé comporte un polyester modifié au glycol ou un polyester modifié par un acide.

## Patentansprüche

1. Mehrschichtige wärmeschrumpfbare Folie, **dadurch gekennzeichnet, dass** sie umfasst:
- eine erste zentrale Schicht, die aus einer ersten Zusammensetzung gebildet ist, die mindestens ein Polyolefin umfasst,
- zwei zweite Zwischenschichten, die aus einer zweiten Zusammensetzung gebildet sind und die jeweils eine der Flächen der ersten Schicht überziehen, wobei die zweite Zusammensetzung ein Harz auf Styrolbasis umfasst,
- dritte Außenschichten, die aus einer dritten Zusammensetzung gebildet sind und jeweils eine der beiden Zwischenschichten überziehen, wobei die dritte Zusammensetzung mindestens ein Polyester umfasst.

2. Folie nach Anspruch 1, wobei das Harz der zweiten Zusammensetzung mindestens ein thermoplastisches Elastomer auf Basis eines Styrol-Blockcopolymers ist.

3. Folie nach Anspruch 2, wobei das Styrol-Blockcopolymer ein Polystyrol-Polybutadien-Polystyrol-Blockcopolymer ist.

4. Folie nach Anspruch 3, wobei das Polystyrol-Polybutadien-Polystyrol-Blockcopolymer 70 Massenprozent an Styrol-Strukturelementen bezogen auf die Gesamtmasse des Blockcopolymers umfasst.

5. Folie nach Anspruch 4, wobei das Harz der zweiten Zusammensetzung neben der folgenden Verbindung umfasst:
a) das Polystyrol-Polybutadien-Polystyrol-Blockcopolymer, als erstes Blockcopolymer, das 70 Massenprozent an Styrol-Strukturelementen bezogen auf die Gesamtmasse des ersten Blockcopolymers hat,
ein oder mehr Verbindungen, die ausgewählt werden aus:
b) einem zweiten Polystyrol-Polybutadien-Polystyrol-Blockcopolymer mit weniger als 70 Massenprozent an Styrol-Strukturelementen bezogen auf die Gesamtmasse des zweiten Blockcopolymers,
c) einem Polystyrol.

6. Folie nach Anspruch 5, wobei die Verbindungen a), b), c) in dem Harz in jeweiligen Massenanteilen vorkommen, die in den folgenden jeweiligen Spannen a) : [30%; 80%], b) : [0%; 70%], c) : [0%; 30%] liegen, wobei die Summe der drei Anteile gleich 100% ist.

7. Folie nach Anspruch 1, wobei die erste Zusammensetzung ein oder mehr Polyolefine umfasst, die ausgewählt werden aus:
d) einem ersten linearen Polyethylen mit niedriger Dichte,
e) einem zweiten linearen Polyethylen mit niedriger Dichte,
f) einem Polyethylen mit hoher Dichte,
g) einem linearen Polyethylen mit niedriger Dichte, das Metallocenkatalysiert ist,
h) einem Polypropylen.

8. Folie nach Anspruch 7, wobei die Polyolefine d), e), f), g) und h) in der ersten Zusammensetzung in jeweiligen Massenanteilen vorhanden sind, die in den jeweiligen Spannen d): [20%; 40%], e) : [30%; 60%], f) : [20%; 40%], g) : [30%; 70%] und h) : [0%; 40%] liegen, wobei die Summe der Massenanteile gleich 100% ist.

9. Folie nach Anspruch 1, wobei die dritte Zusammensetzung ein oder mehr Verbindungen umfasst, die ausgewählt werden aus:
i) einem Polyethylenterephthalat, das mit 1,4 Cyclohexandimethanol modifiziert ist,
j) einem Polyester oder Copolyester mit niedriger Glastemperatur,
k) einem Polyethylenterephthalat, modifiziert mit Neopentylglycol, und
l) einem kristallisierbaren Polyester.

10. Folie nach Anspruch 9, wobei die Verbindungen i), j), k) und l) in der dritten Zusammensetzung in jeweilige Massenanteilen vorhanden sind, die in den jeweiligen Spannen i) : [0%; 99%], j) : [0%; 40%], k) : [0%; 99%] und l) : [0%; 20%] liegen, wobei die Summe der Massenanteile gleich 100% ist.

11. Folie nach Anspruch 9, wobei die Verbindung j) ein Polyethylenterephthalat ist, das mit Diethylenglycol modifiziert ist.

12. Folie nach Anspruch 9, wobei die Verbindung l) ein Polyethylenterephthalat ist.

13. Folie nach Anspruch 9, wobei die dritte Zusammensetzung ferner mindestens ein Gleitmittel umfasst, wie z. B. ein Silikat oder eine Mischung aus Talk und einem Fettsäureamid oder eine Mischung aus mehreren Fettsäureamiden.

14. Folie nach Anspruch 1, wobei die erste zentrale Schicht eine Stärke hat, die zwischen 55 und 70% der Gesamtstärke der Folie liegt, die zweiten Zwischenschichten zusammen eine Stärke zwischen 15 und 30% der Gesamtstärke der Folie haben und die dritten Außenschichten eine Stärke zwischen 15 und 30% der Gesamtstärke der Folie haben.

15. Folie nach Anspruch 1, wobei die dritten Außenschichten jeweils eine Verbindung umfassen, die ein Emissionsspektrum im Nahinfrarot hat, das auf eine Wellenlänge zwischen 1400 und 1900 Nanometern zentriert ist.

16. Folie nach Anspruch 15, wobei die Verbindung ein Lack ist, der die freien Oberflächen der beiden dritten Außenschichten überdeckt.

17. Folie nach Anspruch 15, wobei die Verbindung der dritten Zusammensetzung derart beigemengt ist, dass die dritten Außenschichten ein Emissionsspektrum im Nahinfrarot haben, das auf eine Wellenlänge zwischen 1400 und 1900 Nanometer zentriert ist.

18. Folie nach Anspruch 17, wobei die Verbindung ein Polyethylenterephthalat umfasst.

19. Folie nach Anspruch 17, wobei die Verbindung ein mit Glycol modifiziertes Polyester oder ein Polyester umfasst, das durch eine Säure modifiziert ist.

## Claims

1. A multilayer heat-shrink film, **characterized in that** it comprises:
• a central first layer made up of a first composition comprising at least one polyolefin;
• intermediate second layers made up of a second composition and covering respective faces of the first layer, the second composition comprising a styrene-based resin; and
• outer third layers made up of a third composition and covering respective ones of the intermediate second layers, the third composition comprising at least one polyester.

2. A film according to claim 1, wherein the resin of the second composition comprises at least one thermoplastic elastomer based on a styrene-block copolymer.

3. A film according to claim 2, wherein the styrene-block copolymer is a polystyrene-polybutadiene-polystyrene block copolymer.

4. A film according to claim 3, wherein the polystyrene-polybutadiene-polystyrene block copolymer comprises 70% by weight styrene units relative to the total weight of the block copolymer.

5. A film according to claim 4, wherein the resin of the second composition comprises, in addition to the following compound:
a) the polystyrene-polybutadiene-polystyrene block copolymer, as first block copolymer, having 70% by weight of styrene units relative to the total weight of the first block copolymer;
at least one of the compounds selected from:
b) a second polystyrene-polybutadiene-polystyrene block copolymer having less than 70% by weight of styrene units relative to the total weight of the second block copolymer; and
c) a polystyrene.

6. A film according to claim 5, wherein the compounds a), b), c) are in the resin at respective weight proportions lying in the following respective ranges a): [30%, 80%]; b): [0%, 70%]; c): [0%, 30%]; the sum of the three proportions being equal to 100%.

7. A film according to claim 1, wherein the first composition comprises one or more polyolefins selected from:
d) a first linear low-density polyethylene;
e) a second linear low-density polyethylene;
f) a high-density polyethylene;
g) a metallocene-catalyzed linear low-density polyethylene; and
h) a polypropylene.

8. A film according to claim 7, wherein the polyolefins d), e), f), g), and h) are present in the first composition at respective weight proportions lying in the following respective ranges d): [20%, 40%]; e): [30%, 60%]; f): [20%, 40%]; g): [30%, 70%]; and h): [0%, 40%]; the sum of the weight proportions being equal to 100%.

9. A film according to claim 1, wherein the third composition comprises one or more compounds selected from:
i) a 1,4 cyclohexanedimethanol modified polyethylene terephthalate;
j) a polyester or a copolyester having a low glass transition temperature;
k) a neopentyl glycol modified polyethylene terephthalate; and
l) a crystallizable polyester.

10. A film according to claim 9, wherein the compounds i), j), k), and 1) are present in the third composition in respective weight proportions lying in the following respective ranges i): [0%, 99%]; j): [0%, 40%]; k) : [0%, 99%]; and l): [0%, 20%]; the sum of the weight proportions being equal to 100%.

11. A film according to claim 9, wherein the compound j) is a diethylene glycol modified polyethylene terephthalate.

12. A film according to claim 9, wherein the compound 1) is polyethylene terephthalate.

13. A film according to claim 9, wherein the third composition further comprises at least one slip agent such as a silicate or a mixture of talc and a fatty acid amide or a mixture of a plurality of fatty acid amides.

14. A film according to claim 1, wherein the central first layer has thickness lying in the range 55% to 70% of the total thickness of the film, the intermediate second layers together have thickness lying in the range 15% to 30% of the total thickness of the film, and the outer third layers together have thickness lying in the range 15% to 30% of the total thickness of the film.

15. A film according to claim 1, wherein each of the outer third layers comprises a compound having an emission spectrum in the near infrared that is centered on a wavelength lying in the range 1400 to 1900 nanometers.

16. A film according to claim 15, wherein the compound is a varnish covering the free surfaces of the two outer third layers.

17. A film according to claim 15, wherein the compound is incorporated in the third composition in such a manner that the two outer third layers have an emission spectrum in the near infrared centered on a wavelength lying in the range 1400 to 1900 nanometers.

18. A film according to claim 17, wherein the compound comprises polyethylene terephthalate.

19. A film according to claim 17, wherein the compound comprises a glycol modified polyester or an acid modified polyester.
